# EUROPEAN PATENT APPLICATION

(11) **EP 1 574 625 A1**
(43) Date of publication of application: **14.09.2005**
(21) Application number: 04024484.0
(22) Date of filing: 14.10.2004
(51) Int. Cl.: E02F 9/22, E02F 9/26, E02F 3/96

(54) **Automatic vibration device and method for use in a construction equipment**

(30) Priority: 10.03.2004 KR 2004016075
(71) Applicant: Volvo Construction Equipment Holding Sweden AB, 631 85 Eskilstuna (SE)
(72) Inventor: Kim, Dong Soo, Changwon (KR)
(74) Representative: Dr. Weitzel & Partner

(57) **Abstract**

An automatic vibration device for use in construction equipment includes a vibration signal selection means (15) with a display screen enabling the user to choose work mode where one of a plurality of vibration signals of actuators is selected, or vibration mode where amplitude and frequency of the selected actuator are selected (15a,15b), the vibration signals being combined and stored in advance and played on the display screen (15) to enable the user to select according to work conditions; and an automatic vibration signal output switch (16) enabling output of the selected vibration signal and cancellation of output.

## Description

### BACKGROUND OF THE INVENTION

### 1. Field of the Invention

The present invention relates in general to an automatic vibration device and method for use in construction equipment, which can perform a simple, routine work like the ground leveling by vibrating one of the actuators for a boom, an arm, and a bucket.

More specifically, the present invention relates to an automatic vibration device and method for use in construction equipment, wherein if a user (i.e. an operator) selects an automatic vibration mode for the ground leveling using a work device like a boom or an arm, and selects one of vibration signals which have been combined, stored in advance according to work conditions, and displayed on a display screen, the ground leveling is performed.

### 2. Description of the Related Art

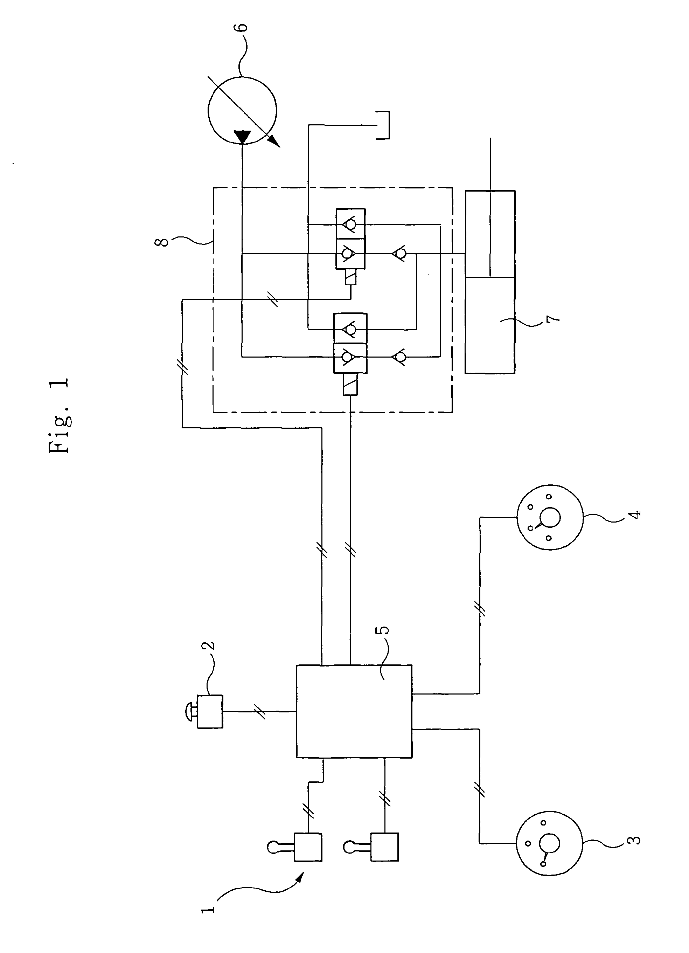

Fig. 1 illustrates a related art vibration device. As shown in Fig. 1, the vibration device includes an operation lever or joystick 1 for driving work devices like a boom or an arm in construction equipment; an automatic vibration switch 2 permitting a user to select an automatic vibration mode; a vibration mode switch 3 where the amplitude and the frequency of vibration are predetermined according to work conditions; a work mode switch 4 permitting a user to select one of boom, arm, and bucket; a controller 5 for operating input signals from the joystick 1, the vibration mode switch 3, and the work mode switch 4, and outputting a vibration signal; and an actuator (boom cylinder) 7 for driving a boom by using hydraulic fluid supplied from a hydraulic pump 6 at an operation of a switching valve 8 that is controlled according to a signal from the controller 5.

If the user turns on the automatic vibration switch 2, the controller 5 operates input signals from the work mode switch 4 and the vibration mode switch 3, and outputs a vibration signal. Then according to the vibration signal outputted from the controller 5, hydraulic fluid is supplied to the actuator 7, and the vibration induced leveling is carried out automatically.

More specifically, the controller 5 operates the input signals according to control input of the joystick 1, and outputs a vibration signal to the switching valve 8. Then, in response to the outputted vibration signal, hydraulic fluid is supplied to the actuator 7 and then the amplitude and the frequency of vibration are changed, consequently diversifying vibration patterns for the leveling operation.

However, to carry out the vibration induced leveling automatically, the related art vibration device needs vibration mode switch 3 which presets the amplitude and the frequency of vibration and work mode switch 4 which determines the work device to be vibrated among the boom, arm, and bucket.

So, the related art vibration device poses a problem in that it has too many switches even though the switches are not used frequently and the switches have a possibility of danger to be operated by mistake of the user.

### SUMMARY OF THE INVENTION

It is, therefore, an object of the present invention to provide an automatic vibration device and method for use in construction equipment having an improved work efficiency of leveling operation, wherein if a user selects an automatic vibration mode for carrying out a routine work such as the ground leveling with a work device, and selects one of vibration signals which are combined in advance according to work conditions and displayed on a display screen, appropriate vibration is generated in a corresponding actuator and through the vibration the ground leveling is automatically performed.

To achieve the above object, there is provided an automatic vibration device for use in construction equipment, wherein the construction equipment is mounted with a plurality of actuators connected to a hydraulic pump for driving work devices including a boom, an arm, and a bucket; an operation lever for generating a driving signal of the each work device under the control of a user; a direction switching valve installed in a hydraulic path between the hydraulic pump and the actuators for controlling a flow direction of hydraulic fluid; valve driving units for driving the direction switching valve; and a controller for outputting a control signal to the valve driving units according to control input of the operation lever, the automatic vibration device including: a vibration signal selection means with a display screen enabling the user to choose work mode where at least one of a plurality of vibration signals of actuators including boom, arm, and bucket is selected, or vibration mode where amplitude and frequency of the selected actuator are selected, the vibration signals being combined and stored in advance and displayed on the display screen to enable the user to select according to work conditions; and an automatic vibration signal output switch enabling output of the selected vibration signal and cancellation of output.

According to a preferred embodiment of the invention, the controller includes a control input calculating unit for calculating control input of the operation lever; a signal generation unit for generating an automatic vibration signal selected by the vibration signal selection means in a case that the user turns on the output switch to output the vibration signal; a signal operation unit for operating the signal generated from the signal generation unit and the control input of the operation lever together; and a valve driver for outputting a control signal to the valve driving units in response to the operated signal inputted from the signal operation unit.

Preferably, the vibration signal selection means includes a display screen for outputting on the screen work mode of the work devices (boom vibration mode, arm vibration mode, and skeleton vibration mode) and vibration mode (step 1 and step 2); a first button installed on one side of the display screen and for enabling the user to select one of the predetermined vibration signals according to work conditions; and a second button installed on one side of the display screen and for enabling the user to set the selected vibration signal displayed on the display screen through the operation of the first button.

The automatic vibration signal output switch is installed independently of the display screen, and has two states: output and cancellation. If the switch is at the output state, a vibration signal is outputted, but if the switch is at the cancellation state, the vibration signal output is cancelled.

Preferably, the vibration mode includes a first step where amplitudes of the boom, the arm, and the skeleton are small and frequencies thereof are relatively high; and a second step where amplitudes of the boom, the arm, and the skeleton are large and frequencies thereof are relatively low.

Another aspect of the present invention provides an automatic vibration method for use in construction equipment mounted with a plurality of actuators connected to a hydraulic pump for driving work devices including a boom, an arm, and a bucket; an operation lever for generating a driving signal of the each work device under the control of a user; a direction switching valve installed in a hydraulic path between the hydraulic pump and the actuators, for controlling a flow direction of hydraulic fluid; valve driving units for driving the direction switching valve; and a controller for outputting a control signal to the valve driving units according to control input of the operation lever, the automatic vibration method including the steps of: selecting from a display screen work mode where at least one of a plurality of vibration signals of actuators including boom, arm, and bucket is selected, or vibration mode where amplitude and frequency of the selected actuator are selected, the vibration signals being combined and stored in advance and displayed on the display screen to enable the user to select the vibration signal according to work conditions; selecting an output of the selected automatic vibration signal or cancellation of output; when the user selects the output of the selected automatic vibration signal, operating, in the controller, the input vibration signal and a signal according to the control input of the operation lever together, but when the user selects the cancellation of output, operating, in the controller, the control input only; and outputting, in the controller, the operated vibration signal to the direction switching valve for driving the actuator to vibrate the work device.

### BRIEF DESCRIPTION OF THE DRAWINGS

The above objects, features and advantages of the present invention will become more apparent from the following detailed description when taken in conjunction with the accompanying drawings, in which:
Fig. 1 is a schematic diagram of a related art vibration device;
Fig. 2 is a schematic diagram of an automatic vibration device for use in construction equipment, according to the present invention;
Fig. 3 and Fig. 4 respectively illustrates a schematic diagram of a vibration signal selection means in a vibration device according to the present invention;
Fig. 5 is a flow chart explaining an automatic vibration method applied to construction equipment, according to the present invention; and
Fig. 6 is an explanatory diagram of a vibration signal from a vibration signal generation unit mounted to an automatic vibration device of the present invention.

### DETAILED DESCRIPTION OF THE PREFERRED EMBODIMENT

A preferred embodiment of the present invention will be described herein below with reference to the accompanying drawings. In the following description, well-known functions or constructions are not described in detail since they would obscure the invention in unnecessary detail.

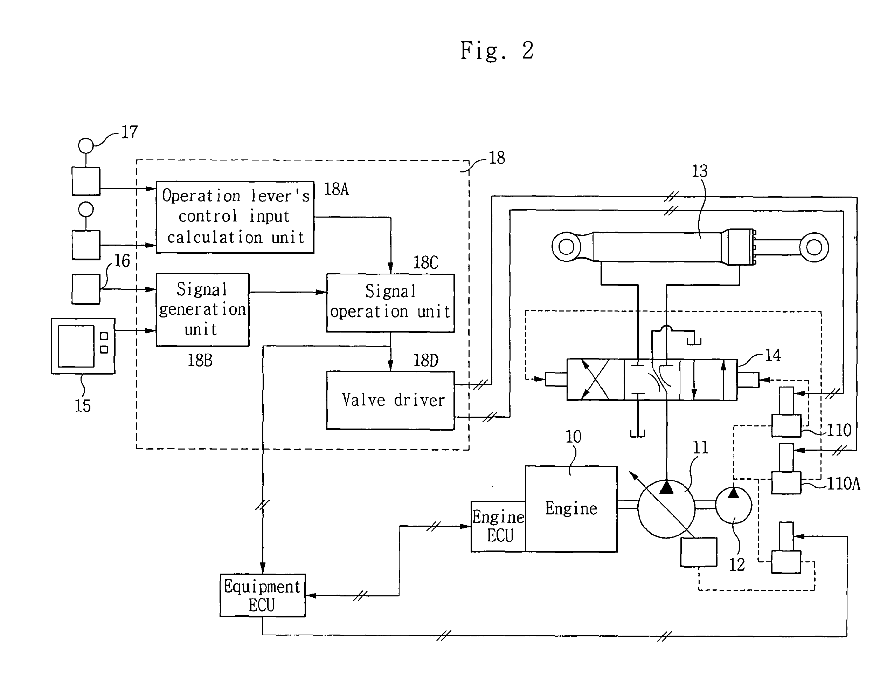

As shown in Figs. 2 to 4, the automatic vibration device for use in construction equipment according to the present invention includes a variable-displacement hydraulic pump 11 and a pilot pump 12, each being connected to an engine 10, an actuator (e.g. a boom cylinder) 13 connected to the hydraulic pump 11 and for driving a boom (not shown), and a direction switching valve 14 installed on a hydraulic path between the hydraulic pump 11 and the boom cylinder 13 and for controlling the flow direction of the hydraulic fluid.

Moreover, the automatic vibration device includes an operation lever 17 for generating a driving signal of the boom by a user, and valve driving units 110, 110A for driving the direction switching valve 14.

The automatic vibration device further includes a vibration signal selection means, through which the user can choose work mode or vibration mode. In work mode, at least one of actuators among the work devices including boom, arm, and bucket is selected. And, in vibration mode, the amplitude and the frequency of vibration corresponding to the work mode the user wants are chosen.

According to the vibration signal selection means, a plurality of vibration signals suitable for use in each work condition is combined and stored in advance and is displayed on a display screen 15. Therefore, the user is able to choose a vibration signal of the boom cylinder 13 suitable for the work condition from the display screen 15.

Also, the automatic vibration device of the invention includes an automatic vibration signal output switch 16 (the user turns on this switch for outputting the vibration signal); and a controller 18 for operating vibration signals inputted from the vibration signal selection means and the automatic vibration signal output switch 16 together and for calculating control input of the operation lever 17, and outputting the operated vibration signal to the direction switching valve 14 for driving the boom cylinder 13, to vibrate the boom.

The above-described vibration signal selection means is composed of the display screen 15 displaying work mode of various kinds of devices, for example, boom vibration mode, arm vibration mode, and skeleton vibration mode for vibrating the arm and the bucket at the same time, wherein each of the work mode is divided into two vibration modes, step 1 and step 2; and first and second buttons 15a, 15b positioned at one side of the display screen 15. By pressing the first button 15a, the user is able to select another item on the screen 15 to change vibration signals displayed according to the work conditions, and by pressing the second button 15b, the user is able to set the selected vibration signal.

As aforementioned, the vibration mode is divided into two: the first step and the second step. In the first step of the vibration mode, amplitudes for the boom, the arm and the bucket are small but frequencies for the same are relatively high. In the second step of the vibration mode, on the other hand, amplitudes for the boom, the arm and the bucket are large but frequencies for the same are relatively low.

Although Fig. 2 illustrates the automatic vibration device mounted with only one actuator (i.e. the boom cylinder 13), an arm cylinder and a bucket cylinder are also mounted to the device. Since the same technical principle is applied, details on the arm cylinder and the bucket cylinder will not be provided here.

The following will now explain in detail the operation of the automatic vibration device for use in construction equipment according to the present invention, with reference to the drawings.

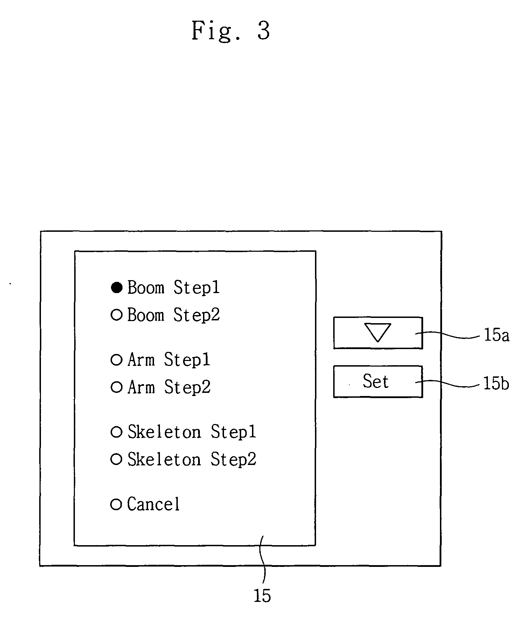

When the user selects an automatic vibration function start menu, the image of Fig. 3 allowing the user to choose a vibration signal is displayed on the display screen.

If the user presses the first button 15a, the cursor moves down from the first "Boom Step 1" to "Boom Step 2" one line each time. Therefore, the user needs to keep pressing the first button 15a until the cursor goes to a proper vibration signal for each work condition.

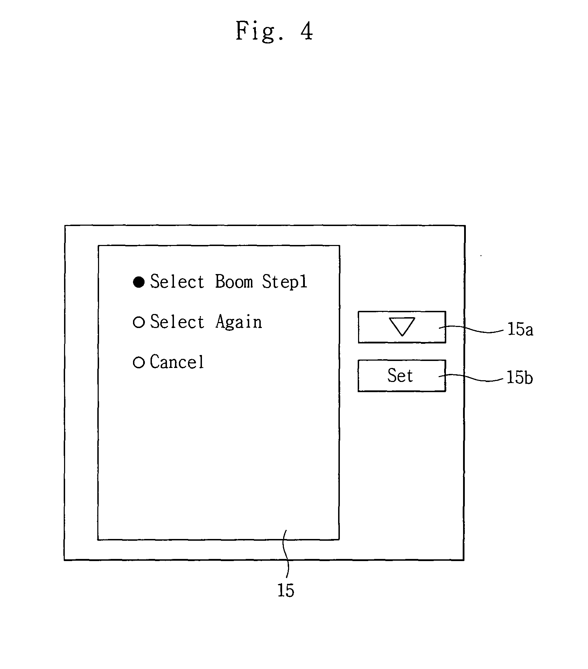

After choosing the vibration signal, the user presses the second button 15b. Then the image shown in Fig. 4 is displayed, informing the user that the vibration signal he chose has been set, and the vibration signal being selected is inputted to the controller 18. At this time if the user presses the first button 15a again, the cursor moves down to the "Select again" item, allowing the user to select another vibration signal, or to the "Cancel" item, canceling the automatic vibration function.

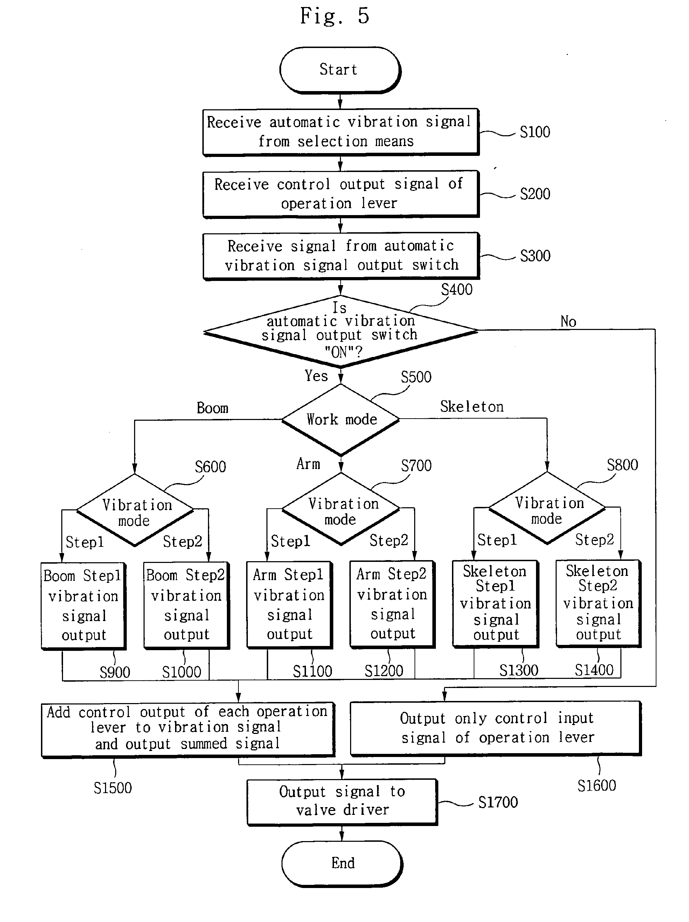

With reference to Fig. 5, the following will now explain how the selected vibration signal is processed in the controller 18.

At first, the controller receives the selected automatic vibration signal (S100).

The controller receives control input of the operation lever 17 and a signal of the automatic vibration signal output switch 16 (S200, S300).

If the automatic vibration signal output switch 16 is in 'on' state, the controller outputs a vibration signal with predetermined amplitude and frequency, in accordance with the kind of a vibration signal selected at a signal generation unit 18B (S500 ~ S1400).

The signal generation unit 18B is embodied in the form of a mathematical function or is composed in a table so that a vibration signal with the frequency of a time base can be outputted repeatedly.

Then the outputted signal from the signal generation unit 18B is added to the control input of the operation lever in a signal operation unit 18C (S1500).

The summed signal is outputted to a valve driving unit 18D of a corresponding valve and drives each actuator. Therefore, when vibration is generated, the user is able to correct or prevent the work device from progressing to only one direction, or move the work device to continue its work at a desired position.

In the meantime, if the automatic vibration signal output switch 16 is in 'off' state (S400), only the control output signal (S200) of the operation lever 17 is outputted to the valve driving unit 18D, and the automatic vibration function is in standby mode.

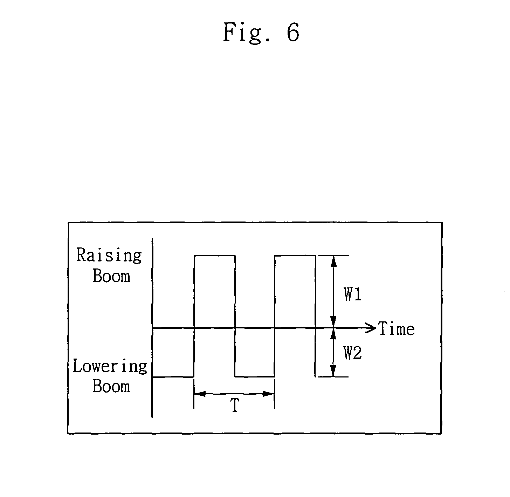

Fig. 6 graphically illustrates an operational signal of the boom cylinder generated by the signal generation unit 18B. The y-axis on the graph indicates drive signal values for raising and lowering the boom cylinder 13 as much as the designated amplitude, and the x-axis on the graph indicates time.

Therefore, when the user selects a vibration signal that has been combined and stored in advance according to work conditions, the work devices like the boom cylinder 13, the arm, and the bucket are vibrated in two different steps of the vibration mode: the first step where amplitudes of boom, arm, bucket and skeleton (W1 or W2) are small and frequencies thereof are relatively high, and the second step where amplitudes of boom, arm, bucket and skeleton (W1 or W2) are large and frequencies thereof are relatively low.

In conclusion, the automatic vibration device and method for use in construction equipment of the present invention can be advantageously used for a routine work, e.g., the ground leveling and improve the work efficiency thereof. For instance, in the case that the user selects the automatic vibration mode to level the ground, the automatic vibration device of the invention provides the user with the screen with items that the user can choose one of vibration signals that have been combined and stored according to the work conditions, and according to the selected vibration signal, vibration is generated to a corresponding actuator.

While the invention has been described in conjunction with various embodiments, they are illustrative only. Accordingly, many alternative, modifications and variations will be apparent to persons skilled in the art in light of the foregoing detailed description. The foregoing description is intended to embrace all such alternatives and variations falling with the spirit and broad scope of the appended claims.

## Claims

1. An automatic vibration device for use in construction equipment mounted with a plurality of actuators connected to a hydraulic pump for driving work devices including a boom, an arm, and a bucket; an operation lever for generating a driving signal of the each work device, under the control of a user; a direction switching valve installed in a hydraulic path between the hydraulic pump and the actuators for controlling a flow direction of hydraulic fluid; valve driving units for driving the direction switching valve; and a controller for outputting a control signal to the valve driving units according to control input to the operation lever, the automatic vibration device comprising:
a vibration signal selection means with a display screen enabling the user to choose work mode where at least one of a plurality of vibration signals of actuators including boom, arm, and bucket is selected, or vibration mode where amplitude and frequency of the selected actuator are selected, the vibration signals being combined and stored in advance and displayed on the display screen to enable the user to select according to work conditions; and
an automatic vibration signal output switch for enabling output of the selected vibration signal and cancellation of output.

2. The device according to claim 1, wherein the controller comprises:
a control input calculating unit for calculating control input of the operation lever;
a signal generation unit for generating an automatic vibration signal selected by the vibration signal selection means in a case that the user turns on the output switch to output the vibration signal;
a signal operation unit for operating the signal generated from the signal generation unit and the control input of the operation lever together; and
a valve driver for outputting a control signal to the valve driving units in response to the operated signal inputted from the signal operation unit.

3. The device according to claim 1 or claim 2, wherein the vibration signal selection means comprises:
a display screen for outputting on the screen work mode of the work devices (boom vibration mode, arm vibration mode, and skeleton vibration mode) and vibration mode (step 1 and step 2);
a first button installed on one side of the display screen and for enabling the user to select one of the predetermined vibration signals according to work conditions; and
a second button installed on one side of the display screen and for enabling the user to set the selected vibration signal displayed on the display screen through the operation of the first button.

4. The device according to claim 1 or claim 2, wherein the vibration mode comprises:
a first step where amplitudes of the boom, the arm, and the skeleton are small and frequencies thereof are relatively high; and
a second step where amplitudes of the boom, the arm, and the skeleton are large and frequencies thereof are relatively low.

5. An automatic vibration method for use in construction equipment mounted with a plurality of actuators connected to a hydraulic pump for driving work devices including a boom, an arm, and a bucket; an operation lever for generating a driving signal of the each work device under the control of a user; a direction switching valve installed in a hydraulic path between the hydraulic pump and the actuators for controlling a flow direction of hydraulic fluid; valve driving units for driving the direction switching valve; and a controller for outputting a control signal to the valve driving units according to control input of the operation lever, the automatic vibration method comprising the steps of:
selecting from a display screen work mode where at least one of a plurality of vibration signals of actuators including boom, arm, and bucket is selected, or vibration mode where amplitude and frequency of the selected actuator are selected, the vibration signals being combined and stored in advance and displayed on the display screen to enable the user to select the vibration signal according to work conditions;
selecting an output of the selected automatic vibration signal or cancellation of output;
when the user selects the output of the selected automatic vibration signal, operating, in the controller, the input vibration signal and a signal according to the control input of the operation lever together, but when the user selects the cancellation of output, operating, in the controller, the control input only; and
outputting, in the controller, the operated vibration signal to the direction switching valve for driving the actuator to vibrate the work device.

6. The device according to claim 5, wherein the vibration mode comprises:
a first step where amplitudes of the boom, the arm, and the skeleton are small and frequencies thereof are relatively high; and
a second step where amplitudes of the boom, the arm, and the skeleton are large and frequencies thereof are relatively low.
